# EUROPÄISCHE PATENTANMELDUNG

(11) **EP 1 248 015 A2**
(43) Veröffentlichungstag der Anmeldung: **09.10.2002**
(21) Anmeldenummer: 02006633.8
(22) Anmeldetag: 25.03.2002
(51) Int. Cl.: F16G 13/04

(54) **Zahnkette, insbesondere Transportzahnkette**

(30) Priorität: 04.04.2001 DE 10116806
(71) Anmelder: Rexroth Mecman GmbH, 30453 Hannover (DE)
(72) Erfinder: Winkelmann, Klaus-Burkhard, 30880 Laatzen (DE); Twardzik, Georg, 31094 Marienhagen (DE)
(74) Vertreter: Maiwald Patentanwalts GmbH

(57) **Zusammenfassung**

Zahnkette, insbesondere Transportzahnkette, mit einer Vielzahl von Zahnlaschen (5), die jeweils über mindestens zwei beabstandet angeordnete Durchbrüche (6a, 6b) verfügen, durch welche eine stiftartige, in der Länge auf die gewünschte Kettenbreite abgestimmte Bolzenanordnung (7) zur Verkettung der einzelnen Zahnlaschen (5) hindurchgeführt ist, wobei die Länge jeder Bolzenanordnung (7) um einen solchen Betrag kleiner als die Kettenbreite ist, dass die Bolzenanordnung (7) beidseitig noch innerhalb des Durchbruchs (6) der jeweiligen Außenlasche (5') endet, wobei das Querschnittsprofil des Durchbruchs (6) unter Bildung einer leichten Spielpassung dem Querschnittsprofil des Bolzenendes (11) entspricht, um das Bolzenende (11) innerhalb der hierdurch gebildeten Ausnehmung (12) mit der Wandung des Durchbruchs (6) überstandsfrei zusammenzufügen.

## Beschreibung

Die Erfindung betrifft eine Zahnkette, insbesondere eine Transportzahnkette mit einer Vielzahl von Zahnlaschen, die jeweils über mindestens zwei beabstandet angeordnete Durchbrüche verfügen, durch welche eine stiftartige, in der Länge auf die gewünschte Kettenbreite abgestimmte Bolzenanordnung zur Verkettung der einzelnen Zahnlaschen hindurchgeführt ist.

Das Einsatzgebiet einer Zahnkette der hier vorliegenden Art erstreckt sich vornehmlich auf fördertechnische Anwendungen. So wird zu Bildung einer linearen Förderstrecke die Zahnkette nach Art eines Förderbandes über eine langgestreckte Trägereinrichtung mit endseitigen Umlenk- und/oder Antriebsrollen endlos geführt. Dabei greift die mit einer Verzahnung ausgestattete Antriebsrolle in eine korrespondierende Verzahnung der Zahnkette ein. Eine derartige Anordnung wird gewöhnlich in Umgebungen mit hohen Temperaturen - wie beispielsweise bei der Hohlglasherstellung - eingesetzt. Die sämtlichst aus Stahl hergestellten Bestandteile der Zahnkette halten den hierbei auftretenden enormen Temperaturen zuverlässig stand.

Eine gattungsgemäße Zahnkette ist aus der DE 198 44 304 C1 bekannt. Die Transportzahnkette besteht aus einzelnen Zahnlaschen, welche hier in zwei Kettensträngen parallel nebeneinanderliegend angeordnet sind und über Rundbolzen oder Wiegegelenke miteinander verkettet sind. Ein Wiegegelenk besteht im Gegensatz zu einem Rundbolzen aus zwei Bestandteilen, nämlich einem Wiegezapfen und einem Lagerzapfen. Der Lagerzapfen ist endseitig mit einer Nietscheibe vernietet, um die Zahnlaschen zusammenzuhalten. Beide Profilzapfen sind in Durchbrüchen der Zahnlaschen gehalten. Bei einer Gelenkbewegung rollen beide Profilzapfen aufeinander ab. Hierbei findet im Gegensatz zu einer Bolzenlagerung keine Gleitreibung im Gelenk statt, wodurch der Verschleiß in diesem Bereich drastisch vermindert werden kann. Bei einer Verbindung der Zahnlaschen mittels Rundbolzen ist der Rundbolzen endseitig mit je einer Sicherungsscheibe versehen, die in eine korrespondierende Umlaufnut im Endbereich des Rundbolzens zum Eingriff kommt. Zur Erfüllung spezieller Transportfunktionen weist die bekannte Zahnkette diverse Lauf- und Staurollen als weitere Bestandteile auf. Die Staurollen wirken hierbei mit dem Transportgut zusammen, wogegen die Laufrollen mit einer Trägereinrichtung korrespondieren.

Im Gegensatz hierzu sind auch Kettenförderer allgemein im Stand der Technik bekannt, die sich derartiger zusätzlicher Bestandteile nicht bedienen. Hierbei wird die Zahnkette innerhalb eines in der langgestreckten Trägereinrichtung ausgebildeten Gleitbetts geführt. Das Gleitbett besteht im Wesentlichen aus einem flachen Bodenbereich mit zwei seitlich angrenzenden senkrechten Flankenbereichen. Die Breite des Gleitbettss ist so bemessen, dass die Zahnkette hierin mit einem geringen Spiel seitlich geführt ist.

Bei dieser Art von Kettenförderern tritt das Problem auf, dass die seitliche Kettenführung durch ein Entlangschleifen der Zahnkette einer starken Abnutzung unterliegt. Die über die Außenlaschen überstehende Bolzenanordnung kommt dabei direkt mit den Flankenbereichen des Gleitbetts in Kontakt. Durch die Bewegung der Zahnkette entsteht in dem Kontaktbereich ein Materialabtrag seitens des Flankenbereichs des Gleitbetts sowie auch seitens der Zahnkette. Der Materialabtrag seitens der Zahnkette bewirkt ein Abschleifen der Bolzenenden und damit auch der Vernietung bzw. Ringsicherung, bis es zu einem Auflösen der Zahnkette kommt. Durch den fortlaufenden Verschleiß der Führung entsteht ein sich ständig vergrößernder Spalt zwischen den Flankenseiten des Gleitbetts und der Zahnkette, was zudem die Führungseigenschaften mehr und mehr verschlechtert, so dass ein hoher Wartungs- und Reparaturaufwand besteht.

Es ist bereits versucht worden, die über die Außenlaschen der Zahnkette hinausragende Bolzenanordnung durch eine korrespondierende Aussparung seitens des Flankenbereichs des Gleitbetts aufzunehmen, so dass der Flankenbereich direkt mit der Außenlasche der Zahnkette zusammenwirken kann. Diese Anordnung vermeidet zwar den vorstehend beschriebenen Nachteil, gleichwohl ist hierfür eine relativ aufwendige Ausgestaltung des Gleitbetts erforderlich. Außerdem reduzieren sich die Verschleißbereiche seitens des Gleitbetts auf nurschmale bandförmige Flächen, welche solange dem Verschleiß unterliegen bis schließlich auch die Bolzenenden mit dem Flankenbereich des Gleitbetts in Kontakt treten und auch hier einen Abtrag verursachen.

Es ist die Aufgabe der vorliegenden Erfindung, eine Zahnkette der vorstehend beschriebenen Art dahingehend weiter zu verbessern, dass deren Verschleißneigung bei einer seitlichen Führung reduziert wird.

Die Aufgabe wird ausgehend von einer Zahnkette gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Länge jeder Bolzenanordnung der Zahnkette um einen solchen Betrag kleiner als die Kettenbreite ist, dass die Bolzenanordnung beidseitig noch innerhalb des Durchbruchs der jeweiligen Außenlasche endet, wobei das Querschnittsprofil des Durchbruchs unter Bildung einer leichten Spielpassung dem Querschnittsprofil des Bolzenendes entspricht, um das Bolzenende innerhalb der hierdurch gebildeten Ausnehmung mit der Wandung des Durchbruchs überstandsfrei zusammenzufügen.

Durch die erfindungsgemäße Lösung wird der Vorteil erzielt, dass nunmehr die Bolzenanordnung nicht über die Außenlasche hervorsteht. Infolgedessen steht die gesamte Oberfläche der Außenlasche zur Seitenführung der Zahnkette zur Verfügung, was die Voraussetzung für einen minimalen Verschleiß liefert. Dadurch wird die Standzeit der Zahnkette erheblich erhöht. Es ist erkannt worden, dass bei einer Anordnung des Bolzenendes noch innerhalb des Durchbruchs der Außenlasche mit dem Fertigungsverfahren des Fügens eine feste Verbindung zwischen der Bolzenanordnung und der Außenlasche herstellbar ist, um damit zuverlässig die Zahnlaschen der Zahnkette zusammen zu halten. Auf diese Weise entsteht eine insbesondere für eine Transportfunktion geeignete Zahnkette mit glatten, ebenen, durch die Außenlaschen definierten Seitenflächen, deren nutzbare Transportbreite gleich der Gesamtbreite ist und die in einem korrespondierenden Gleitbett spielarm laufen kann. Für das Gleitbett ist eine nur minimale Überbreite gegenüber der Zahnkette erforderlich. Es kann ein Gleitbett mit einfach herzustellenden, ebenen, glatten Flankenbereichen genutzt werden. Bei dieser Anordnung findet zwischen den Seitenflächen der Zahnkette und den Flankenbereichen des Gleitbetts eine großflächige Berührung statt, die insoweit keinen hohen Flächendruck aufkommen lässt. Der Materialabtrag je Zeiteinheit wird deshalb in der der Führung dienenden Berührungszone sehr gering sein. Da hier gleichwohl ein großes beidseitiges Verschleißvolumen abgetragen werden müsste, bevor eine merkliche Vergrößerung des eng einstellbaren seitlichen Spaltspiels eintritt, bietet die erfindungsgemäße Ausführung der Transportzahnkette den Vorteil konstanter Betriebsbedingungen über lange Zeiträume. Da die Bolzenanordnung jeweils vertieft in der korrespondierenden Außenlasche endet, bietet die erfindungsgemäße Lösung gegenüber herkömmlichen Lösungen mit Nietköpfen oder Ringsicherungen den Vorteil einer weitaus längeren Nutzungsdauer, bis die durch Fügen hergestellte Verbindung zwischen der Bolzenanordnung und der Außenlasche infolge Materialabtrags durch Verschleiß gefährdet wird.

Gemäß einer weiteren die Erfindung verbessernden Maßnahme können die Außenlaschen relativ dicker als die übrigen Zahnlaschen dimensioniert werden, um die für das Zusammenfügen mit der Bolzenanordnung zur Verfügung stehende effektive Tiefe der Ausnehmung zu maximieren. Durch eine geeignete Dimensionierung kann die erforderliche Festigkeit für die Verbindung zwischen der Außenlasche und der Bolzenanordnung entsprechend der gewählten Fügetechnik sowie der Belastung der Zahnkette durch Versuche oder Berechnung ermittelt werden.

Das Zusammenfügen der Bolzenanordnung mit der Außenlasche erfolgt vorzugsweise durch Schweißen oder Nieten. Wegen der beengten Platzverhältnisse können jedoch nur spezielle Schweiß- bzw. Niettechniken angewendet werden. Im Falle des Schweißens empfiehlt es sich die beiden zu verbindenden Bauteile mittels eines Laserschweißverfahrens zusammenzufügen, wobei die hierbei erzeugte Schweißnaht unterbrochen oder geschlossen ausgeführt werden kann. Im Falle einer unterbrochenen Schweißnaht kann es je nach den Belastungsparametern der Zahnkette ausreichend sein, zumindest einen Schweißpunkt oder zumindest einen Schweißnahtabschnitt innerhalb der Ausnehmung des Durchbruchs der Außenlasche anzubringen. Bei höheren Belastungsparametern der Zahnkette empfiehlt es sich dagegen, eine ringartig innerhalb der Ausnehmung anzubringende geschlossene Schweißnaht vorzusehen.

Vorzugsweise ist die Schweißnaht im Querschnitt gesehen im Wesentlichen triangulär ausgebildet. Dabei kann eine Schweißnahtseite mit der Stirnfläche des Bolzenendes zusammenwirken und eine andere - im Wesentlichen senkrecht hierzu angeordnete - Schweißnahtseite mit der Wandung des Durchbruchs korrespondieren. Durch diese Schweißnahtausbildung wird der knappe Wandungsbereich innerhalb des Durchbruchs effektiv für eine Verbindung mit möglichst hoher Festigkeit ausgenutzt.

Gemäß einer anderen denkbaren Alternative kann das Zusammenfügen des Bolzenendes mit der Außenlasche durch ein spezielles Vernieten nach Art einer Körnung erfolgen, wobei die hierbei entstehende Randaufwerfung des Bolzenendes eine Presspassung mit der Wandung des Durchbruchs bildet. Die Körnung sollte in diesem Falle zentral auf der Stirnfläche des Bolzenendes aufgebracht werden, um die Festigkeit der Presspassung durch eine gleichmäßige Randaufwerfung zu maximieren. Die Verbindung kann zusätzlich durch eine anschließende Versiegelung der Ausnehmung mit Epoxidharz oder dergleichen fixiert werden.

Gemäß einer weiteren die Erfindung verbessernden Maßnahme kann endseitig der Bolzenanordnung ein Absatz oder eine Anformung oder dergleichen vorgesehen werden, um damit die Eintauchtiefe des Bolzenendes in den Durchbruch der Außenlasche zu definieren. Diese Maßnahme vereinfacht die Montage der Zahnkette und stellt eine gleichbleibende Qualität der durch die Erfindung bereitgestellten Verbindungsart sicher.

Die bei der Zahnkette zum Einsatz kommende Bolzenanordnung kann je nach Konstruktion der Zahnkette sowohl als Rundbolzen oder nach Art eines Gelenkbolzens oder auf eine andere bekannte Art ausgebildet werden. Auch eine gemischte Anordnung von Rundbolzen und Gelenkbolzen innerhalb ein und derselben Zahnkette ist denkbar. So wird beispielsweise bei zusätzlich innerhalb der Zahnkette integrierten Lauf- und/oder Staurollen eine Bolzenanordnung in Form eines Rundbolzens bevorzugt werden, die gleichzeitig als Achse für die Lauf- und/oder Staurollen dienen kann.

Weitere die Erfindung verbessernde Maßnahmen sind in den Unteransprüchen angegeben oder werden nachfolgend gemeinsam mit der Beschreibung eines bevorzugten Ausführungsbeispiels der Erfindung anhand der Figuren näher dargestellt. Es zeigt:
- Fig. 1: eine Querschnittsdarstellung eines Kettenförderers mit einer in einem Gleitbett angeordneten erfindungsgemäßen Zahnkette,
- Fig. 2: eine Seitenansicht der Zahnkette gemäß Fig. 1,
- Fig. 3: einen Detailausschnitt der Seitenansicht gemäß Fig. 2 im Bereich einer Außenlasche, und
- Fig. 4: einen Querschnitt durch die Außenlasche gemäß Fig. 3 im Schnitt A-A.

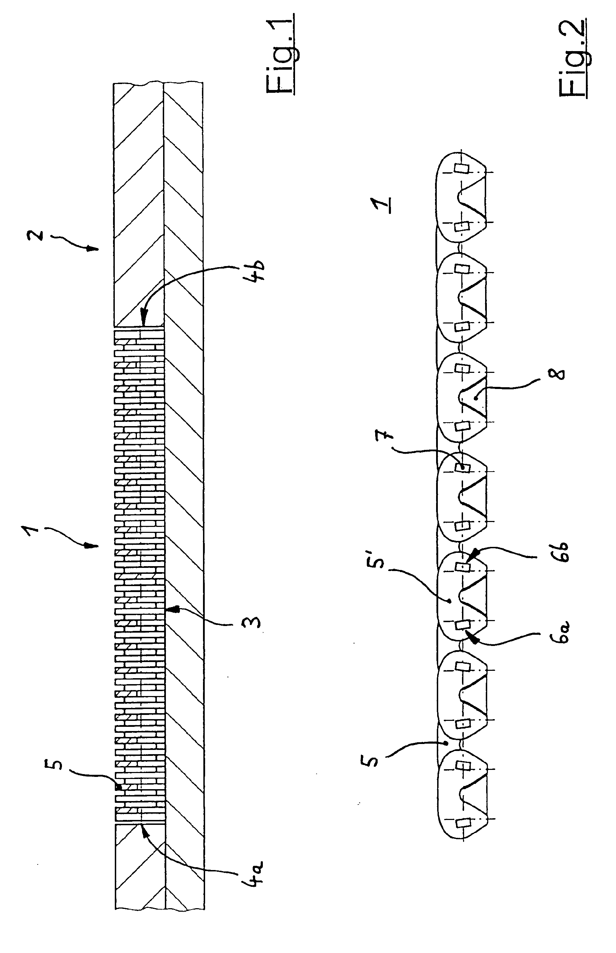

Ein Kettenförderer umfasst gemäß Fig. 1 eine Zahnkette 1, die zum Antrieb mit einer Antriebsradanordnung korrespondiert. Die Zahnkette 1 ist endlos ausgebildet und läuft entlang einer langgestreckten Trägereinrichtung 2. Der in diesem Ausführungsbeispiel dargestellte Obertrum der Zahnkette 1 ist dabei innerhalb eines in der Trägereinrichtung 2 ausgebildeten Gleitbetts geführt. Das Gleitbett wird aus einem flachen Bodenbereich 3 mit zwei seitlich angrenzenden, senkrechten Flankenbereichen 4a, 4b gebildet. Innerhalb des Gleitbetts ist die Zahnkette 1 spielarm geführt. Die Zahnkette 1 besteht in diesem Ausführungsbeispiel aus einer Vielzahl einzelner Zahnlaschen 5 aus Stahl. Die Trägereinrichtung 2 ist hier ebenfalls aus Stahl gefertigt.

Gemäß Fig. 2 sind die einzelnen Zahnlaschen 5 der Zahnkette 1 mit zwei beabstandet zueinander angeordneten Durchbrüchen 6a, 6b versehen. Über diese Durchbrüche 6a, 6b jeder Zahnlasche 1 erfolgt die Verkettung der Zahnlaschen 1 zu einer Transportzahnkette derart, dass hierdurch je eine stiftartige, in der Länge auf die gewünschte Kettenbreite abgestimmte Bolzenanordnung 7 hindurchgeführt ist. Die Bolzenanordnung 7 ist in diesem Ausführungsbeispiel nach Art eines Gelenkbolzens ausgebildet. Insoweit besteht die Bolzenanordnung 7 bekannterweise aus einem Wiegezapfen sowie einem Lagerzapfen. Der Lagerzapfen der Bolzenanordnung 7 ist endseitig mit der Außenlasche 5' der Zahnkette 1 fest gefügt. Beide profilierten Zapfen sind in den Durchbrüchen 6a, 6b der Zahnlasche 5 gehalten. Bei einer Gelenkbewegung im Betrieb der Zahnkette 1 rollen beide profilierten Zapfen aufeinander ab. Hierbei findet keine Gleitreibung im Gelenk statt, wodurch der Verschleiß in diesem Bereich gering ist. Jede Zahnlasche 5 ist mit einer Verzahnung 8 ausgestattet, worüber die Zahnkette 1 mit einer - nicht weiter dargestellten - Antriebsradanordnung zusammenwirkt. Die Verzahnung 8 ist dabei nach Art einer Evolventenverzahnung ausgebildet.

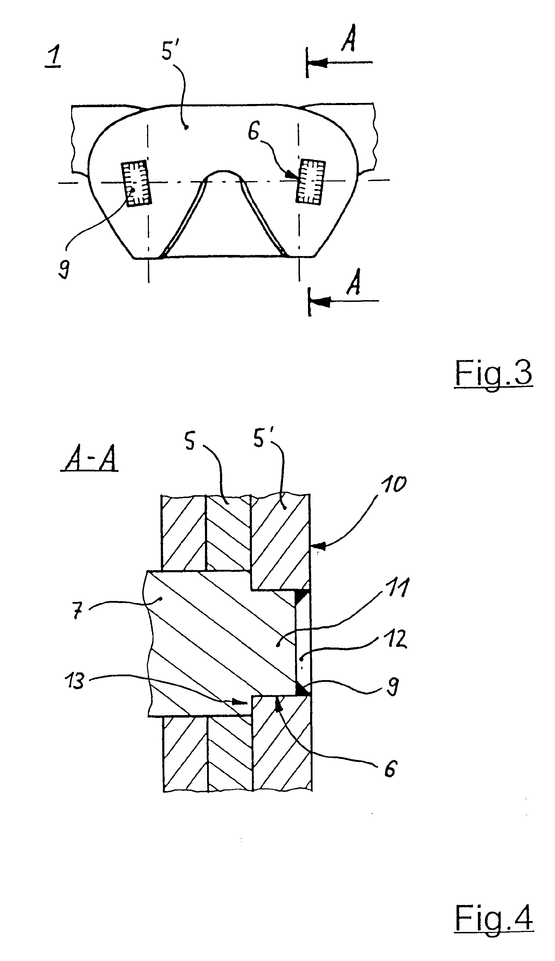

Wie detaillierter aus Fig. 3 hervorgeht, ist das Querschnittsprofil des Durchbruchs 6 jeder Außenlasche 5' an das Querschnittsprofil des Endbereiches der Bolzenanordnung 7 angepasst, wobei eine leichte Spielpassung besteht. Die Bolzenanordnung 7 ist mit der Außenlasche 5' über eine Verschweißung zusammengefügt. Die hierbei erzeugte Schweißnaht 9 verläuft geschlossen, ringartig innerhalb des inneren Randes des Durchbruchs 6.

Wie aus der Fig. 4 ersichtlich ist, steht die Schweißnaht 9 dabei nicht über die Oberfläche 10 der Außenlasche 5' über. Die Schweißnaht 9 ist im Querschnitt gesehen im Wesentlichen triangulär ausgebildet. Dabei wirkt eine Schweißnahtseite mit der Stirnfläche des Bolzenendes 11 zusammen. Die benachbarte, im Wesentlichen senkrecht hierzu angeordnete Schweißnahtseite wirkt dagegen mit der Wandung des Durchbruchs 6 zusammen, so dass in Ergebnis dessen eine stabile Verbindung zwischen der Bolzenanordnung 7 und der Außenlasche 5' für einen Zusammenhalt der anderen Zahnlaschen 5 entsteht. Die durch die verkürzte Ausbildung der Bolzenanordnung 7 erzeugte Ausnehmung 12 innerhalb des Durchbruchs 6 ist von ihrer Tiefe derart dimensioniert, dass eine ausreichend starke Schweißnaht 9 erzeugt werden kann. Um eine gleichbleibende Eintauchtiefe des Bolzenendes 11 in den Durchbruch 6 zu gewährleisten, ist die Bolzenanordnung 7 endseitig mit einem Absatz 13 versehen, welcher insoweit als Anschlag dient.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere ist die vorliegende Erfindung nicht beschränkt auf den alleinigen Einsatz von Zahnlaschen als Kettenbestandteil. Daneben können je nach zu erfüllender Transportfunktion auch zusätzliche Bauteile, wie Lauf- und/oder Staurollen entsprechend in die Zahnkette integriert werden.

### Bezugszeichenliste

- **1**: Zahnkette
- **2**: Trägereinrichtung
- **3**: Bodenbereich
- **4**: Flankenbereich
- **5**: Zahnlasche
- **6**: Durchbruch
- **7**: Bolzenanordnung
- **8**: Verzahnung
- **9**: Schweißnaht
- **10**: Außenfläche
- **11**: Bolzenende
- **12**: Ausnehmung
- **13**: Absatz

## Patentansprüche

1. Zahnkette, insbesondere Transportzahnkette, mit einer Vielzahl von Zahnlaschen (5), die jeweils über mindestens zwei beabstandet angeordnete Durchbrüche (6a, 6b) verfügen, durch welche eine stiftartige, in der Länge auf die gewünschte Kettenbreite abgestimmte Bolzenanordnung (7) zur Verkettung der einzelnen Zahnlaschen (5) hindurchgeführt ist,
**dadurch gekennzeichnet, dass** die Länge jeder Bolzenanordnung (7) um einen solchen Betrag kleiner als die Kettenbreite ist, dass die Bolzenanordnung (7) beidseitig noch innerhalb des Durchbruchs (6) der jeweiligen Außenlasche (5') endet, wobei das Querschnittsprofil des Durchbruchs (6) unter Bildung einer leichten Spielpassung dem Querschnittsprofil des Bolzenendes (11) entspricht, um das Bolzenende (11) innerhalb der hierdurch gebildeten Ausnehmung (12) mit der Wandung des Durchbruchs (6) überstandsfrei zusammenzufügen.

2. Zahnkette nach Anspruch 1,
**dadurch gekennzeichnet, dass** das Zusammenfügen des Bolzenendes (11) mit der Außenlasche (5') durch eine Schweißnaht (9) erfolgt.

3. Zahnkette nach Anspruch 2,
**dadurch gekennzeichnet, dass** die Schweißnaht (9) derart unterbrochen ausgeführt ist, dass zumindest ein Schweißpunkt oder zumindest ein Schweißnahtabschnitt innerhalb der Ausnehmung (12) angeordnet ist.

4. Zahnkette nach Anspruch 2,
**dadurch gekennzeichnet, dass** die Schweißnaht (9) geschlossen, ringartig innerhalb der Ausnehmung (12) verläuft.

5. Zahnkette nach Anspruch 2,
**dadurch gekennzeichnet, dass** die Schweißnaht (9) im Querschnitt gesehen im wesentlichen triangulär ausgebildet ist, wobei eine Schweißnahtseite mit der Stirnfläche des Bolzenendes (11) zusammenwirkt und eine andere im wesentlichen senkrecht hierzu angeordnete Schweißnahtseite mit der Wandung des Durchbruchs (6) zusammenwirkt.

6. Zahnkette nach Anspruch 1,
**dadurch gekennzeichnet, dass** das Zusammenfügen des Bolzenendes (11) mit der Außenlasche (5') durch ein Vernieten nach Art einer Körnung erfolgt, wobei die hierbei entstehende Randaufwerfung des Bolzenendes (11) eine Presspassung mit dem Durchbruch (6) bildet.

7. Zahnkette nach Anspruch 1,
**dadurch gekennzeichnet, dass** die Bolzenanordnung (7) endseitig mit einem Absatz (13) versehen ist, um die Eintauchtiefe des Bolzenendes (11) in den Durchbruch (6) der Außenlasche (5') zu definieren.

8. Zahnkette nach einem der vorstehenden Ansprüche,
**dadurch gekennzeichnet, dass** die Bolzenanordnung (7) nach Art eines Rundbolzens oder nach Art eines Gelenkbolzens ausgebildet ist.

9. Zahnkette nach einem der vorstehenden Ansprüche,
**dadurch gekennzeichnet, dass** die Außenlaschen (5') relativ dicker als die übrigen Zahnlaschen (5) dimensioniert sind, um die für das Zusammenfügen mit der Bolzenanordnung (7) zur Verfügung stehende effektive Tiefe der Ausnehmung (12) zu maximieren.

10. Zahnkette nach einem der vorstehenden Ansprüche,
**dadurch gekennzeichnet, dass** auf der Bolzenanordnung (7) zusätzliche Lauf- und/oder Staurollen angeordnet sind, um dementsprechende Transportfunktionen auszuführen.

11. Kettenförderer, umfassend eine Zahnkette nach einem der vorstehenden Ansprüche, die endlos über eine mit der Verzahnung der Zahnkette zusammenwirkende Antriebsradanordnung geführt ist, und die innerhalb eines in einer langgestreckten Trägereinrichtung (2) ausgebildeten Gleitbetts geführt ist, welches aus einem flachen Bodenbereich (3) mit zwei seitlich angrenzenden, senkrechten Flankenbereichen (4a, 4b) besteht, die zur spielarmen Seitenführung mit den jeweils zugeordneten Außenlaschen (5') der Zahnkette (1) korrespondieren.
